# EUROPEAN PATENT APPLICATION

(11) **EP 4 804 307 A1**
(43) Date of publication of application: **09.09.2026**
(21) Application number: 24885326.9
(22) Date of filing: 26.09.2024
(51) Int. Cl.: H01M 50/184, H01M 50/107, H01M 50/152, H01M 50/167

(54) **SECONDARY BATTERY AND METHOD FOR MANUFACTURING SECONDARY BATTERY**

(30) Priority: 31.10.2023 JP 2023187160
(71) Applicant: Panasonic Intellectual Property Management Co., Ltd., Kadoma-shi, Osaka 571-0057 (JP)
(72) Inventor: KASHIMURA, Ryo, Kadoma-shi, Osaka 571-0057 (JP)
(74) Representative: Eisenführ Speiser
(86) International application number: PCT/JP2024/034343
(87) International publication number: WO 2025/094549

(57) **Abstract**

This secondary battery comprises: an electrode body that is obtained by winding a positive electrode and a negative electrode with a separator interposed therebetween; a cylindrical outer can (20) that has a bottom part and that houses the electrode body; a sealing body (30) that closes an opening (24) of the outer can (20); and an annular gasket (40) that is interposed between the outer can and the sealing body (30), the sealing body (30) being fixed by crimping to the opening (24) of the outer can (20) with the gasket (40) interposed therebetween. The secondary battery is characterized in that: the gasket includes a first gasket (41) and a second gasket (42) disposed on the bottom side of the first gasket (41); the sealing body (30) is sandwiched between the first gasket (41) and the second gasket (42) from both sides in the axial direction of the outer can (20); and at least a portion of the first gasket (41) is adjacent to the second gasket (42) in the radial direction of the outer can (20).

## Description

### TECHNICAL FIELD

The present disclosure relates to a secondary battery and a method of manufacturing a secondary battery.

### BACKGROUND ART

In general, in a secondary battery, a sealing assembly that closes an opening portion of a housing can is crimped and fixed to the opening portion of the housing can via a resin gasket (see PATENT LITERATURE 1, for example). Sealing of the inside of the battery and insulation between the housing can and the sealing assembly are secured by providing the gasket.

### CITATION LIST

### PATENT LITERATURE

PATENT LITERATURE 1: International Publication No. WO 2016/157749

### SUMMARY

Incidentally, warpage or wrinkles may occur in the vicinity of an inner end of a gasket in the radial direction when an opening portion of a housing can is crimped if the gasket is constituted by one member as in the secondary battery disclosed in PATENT LITERATURE 1. If warpage or wrinkles of the gasket occur, the gasket may interfere with another part, which is unfavorable.

It has become apparent that if the gasket is constituted by one member, sealing inside the battery may be degraded when the opening portion of the housing can is crimped. This is presumed to be because a resin material constituting the gasket is pushed out inward in the radial direction when the opening portion of the housing can is crimped and the thickness of the gasket on the outer side in the radial direction thus decreases.

Thus, it is an advantage of the present disclosure to curb occurrence of warpage or wrinkles of a gasket when an opening portion of a housing can is crimped while securing sealing inside a battery.

A secondary battery according to an aspect of the present disclosure comprises: an electrode assembly in which a positive electrode and a negative electrode are wound with a separator interposed therebetween; a cylindrical housing can that has a bottom portion and accommodates the electrode assembly; a sealing assembly that closes an opening portion of the housing can; and an annular gasket that is interposed between the housing can and the sealing assembly, the sealing assembly being crimped and fixed to the opening portion of the housing can with the gasket interposed, wherein the gasket includes a first gasket and a second gasket that is disposed on a side closer to the bottom portion than the first gasket, the sealing assembly is sandwiched between the first gasket and the second gasket from both sides of the housing can in an axial direction, and at least a part of the first gasket is adjacent to the second gasket in a radial direction of the housing can.

Also, a method of manufacturing a secondary battery according to an aspect of the present disclosure is a method of manufacturing a secondary battery comprising a cylindrical housing can that has a bottom portion and accommodates an electrode assembly, a disk-shaped sealing assembly that closes an opening portion of the housing can, and an annular gasket that is interposed between the housing can and the sealing assembly, the gasket including a first gasket and a second gasket that abuts on the first gasket and is disposed on a side closer to the bottom portion than the first gasket, the method including: sandwiching the sealing assembly between the first gasket and the second gasket from both sides in an axial direction in a state where at least a part of the first gasket is placed adjacent to the second gasket in a radial direction of the housing can before the opening portion of the housing can is crimped; and folding the opening portion of the housing can inward in the radial direction and crimping and fixing the sealing assembly to the opening portion of the housing can with the gasket interposed.

Moreover, a method of manufacturing a secondary battery according to another aspect of the present disclosure is a method of manufacturing a secondary battery comprising a cylindrical housing can that has a bottom portion and accommodates an electrode assembly, a disk-shaped sealing assembly that closes an opening portion of the housing can, and an annular gasket that is interposed between the housing can and the sealing assembly and is constituted of a resin material, the gasket including a first gasket and a second gasket that abuts on the first gasket and is disposed on a side closer to the bottom portion than the first gasket, the method including: sandwiching the sealing assembly between the first gasket and the second gasket from both sides in an axial direction before the opening portion of the housing can is crimped; heating the first gasket and the second gasket at a temperature that is greater than or equal to a softening temperature of the resin material from an outer side in a radial direction; and folding the opening portion of the housing can inward in the radial direction and crimping and fixing the sealing assembly to the opening portion of the housing can with the gasket interposed.

According to the secondary battery of an aspect of the present disclosure, it is possible to curb occurrence of warpage or wrinkles of the gasket when the opening portion of the housing can is crimped while securing sealing inside the battery.

### BRIEF DESCRIPTION OF DRAWINGS

FIG. 1 is a sectional view of a secondary battery in an example of an embodiment.
FIG. 2 is a sectional view of a gasket constituting the secondary battery in a state before a housing can is crimped in an example of the embodiment.
FIG. 3 is a sectional view of the gasket constituting the secondary battery in a state after the housing can is crimped in an example of the embodiment.
FIG. 4 is a sectional view of the gasket constituting the secondary battery in a state before the housing can is crimped in another example of the embodiment.
FIG. 5 is a sectional view of the gasket constituting the secondary battery in a state before the housing can is crimped in another example of the embodiment.
FIG. 6 is a sectional view of the gasket constituting the secondary battery in a state before the housing can is crimped in another example of the embodiment.

### DESCRIPTION OF EMBODIMENTS

Hereinafter, an example of an embodiment of a secondary battery according to the present disclosure will be described in detail with reference to the drawings. The embodiment described below is just an example, and the present disclosure is not limited to the following embodiment. Also, modes achieved by selectively combining components of the embodiment described below are also included in the present disclosure.

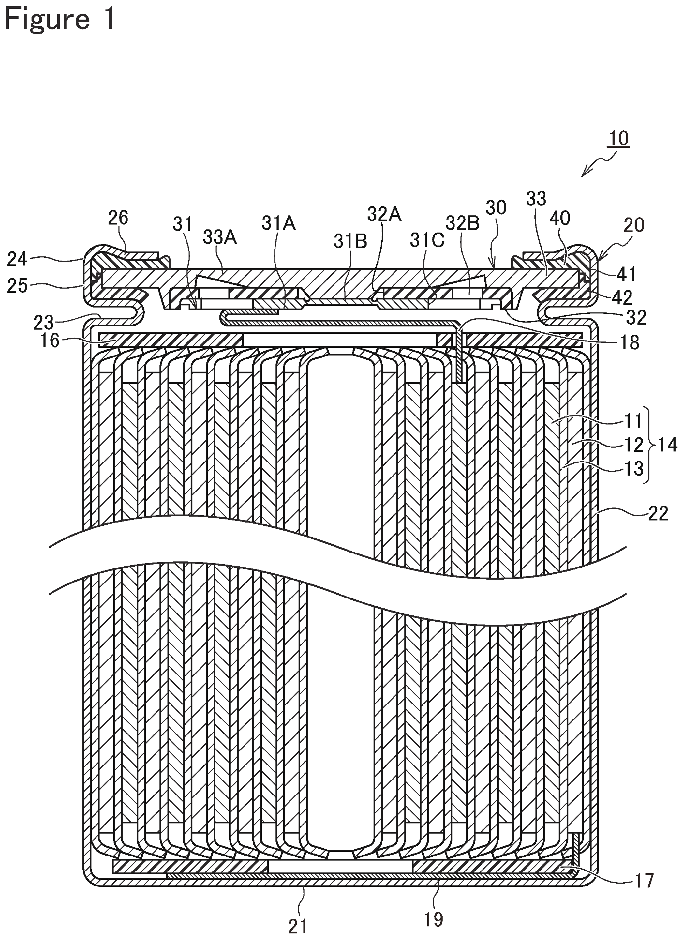

FIG. 1 is a view schematically illustrating a section of a secondary battery 10 in an example of the embodiment. As illustrated in FIG. 1, the secondary battery 10 comprises an electrode assembly 14, an electrolyte (not illustrated), and a housing can 20 that accommodates the electrode assembly 14 and the electrolyte. The electrode assembly 14 includes a positive electrode 11, a negative electrode 12, and a separator 13 and has a structure in which the positive electrode 11 and the negative electrode 12 are wound in a spiral shape with the separator 13 interposed therebetween. The housing can 20 is a metal container with a bottomed cylindrical shape opened on one side in the axial direction, and the opening of the housing can 20 is closed by a sealing assembly 30. Hereinafter, a sealing assembly 30 side in the axial direction (height direction) of the secondary battery 10 will be defined as an "upper side", while a bottom portion 21 side of the housing can 20 in the axial direction will be defined as a "lower side".

The electrolyte has lithium ion conductivity. The electrolyte may be a liquid electrolyte (electrolytic solution) or may be a solid electrolyte.

The liquid electrolyte (electrolytic solution) includes a non-aqueous solvent and an electrolyte salt dissolved in the non-aqueous solvent. As the non-aqueous solvent, esters, ethers, nitriles, amides, a mixture solvent of two or more kinds of these, and the like are used, for example. Examples of the non-aqueous solvent include ethylene carbonate (EC), ethyl methyl carbonate (EMC), dimethyl carbonate (DMC), diethyl carbonate (DEC), and a mixture solvent thereof. The non-aqueous solvent may contain a halogen-substituted product (for example, fluoroethylene carbonate) in which at least a part of hydrogen in such solvent is substituted with a halogen atom of fluorine or the like. As the electrolyte salt, lithium salts such as LiPF₆, for example, are used.

As the solid electrolyte, it is possible to use a solid or gel polymer electrolyte or an inorganic solid electrolyte, for example. As the inorganic solid electrolyte, it is possible to use known materials (for example, an oxide-based solid electrolyte, a sulfide-based solid electrolyte, and halogen-based solid electrolyte) for all-solid-state lithium ion secondary batteries and the like. The polymer electrolyte includes, for example, a lithium salt and a matrix polymer, or a non-aqueous solvent, a lithium salt, and a matrix polymer. As the matrix polymer, a polymer material that absorbs the non-aqueous solvent and is gelatinized, for example, is used. Examples of the polymer material include a fluorine resin, an acrylic resin, and a polyether resin.

All of the positive electrode 11, the negative electrode 12, and the separator 13 constituting the electrode assembly 14 have strip-shaped elongated bodies and are alternately stacked in the radial direction of the electrode assembly 14 by being wound in a spiral shape. The negative electrode 12 is formed to have a slightly larger dimension than the positive electrode 11 to prevent lithium precipitation. In other words, the negative electrode 12 is formed to be longer in the long-side direction and the width direction (short-side direction) than the positive electrode 11. The separator 13 is formed to have a slightly larger dimension at least than the positive electrode 11, and two separators 13 are disposed to sandwich the positive electrode 11. The secondary battery 10 comprises insulating plates 16 and 17 disposed on the upper and lower sides of the electrode assembly 14, respectively.

The positive electrode 11 has a positive electrode core and positive electrode mixture layers formed on the positive electrode core. For the positive electrode core, it is possible to use a metal foil that is stable within a potential range of the positive electrode 11 such as aluminum or an aluminum alloy, a film with such metal disposed on a surface layer, or the like. The positive electrode mixture layers include a positive electrode active material, a conductive agent, and a binder and are preferably formed on both surfaces of the positive electrode core except for a positive electrode core exposed portion (not illustrated) to which a positive electrode lead 18 is welded. The positive electrode 11 can be produced by applying a positive electrode mixture slurry including the positive electrode active material, the conductive agent, the binder, and the like on the positive electrode core, drying the coating film, and then compressing it to form the positive electrode mixture layers on both surfaces of the positive electrode core, for example.

The positive electrode mixture layer includes a particulate lithium metal complex oxide as the positive electrode active material. The lithium metal complex oxide is a complex oxide containing a metal element such as Co, Mn, Ni, or Al in addition to Li. The metal element constituting the lithium metal complex oxide is, for example, at least one of the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, it is preferable to contain at least one of the group consisting of Co, Ni, and Mn. Suitable examples of the complex oxide include lithium metal complex oxide containing Ni, Co, and Mn and a lithium metal complex oxide containing Ni, Co, and Al.

Examples of the conductive agent included in the positive electrode mixture layers include carbon black such as acetylene black and Ketjenblack and carbon materials such as graphite, carbon nanotube (CNT), carbon nanofiber, and graphene. Examples of the binder included in the positive electrode mixture layers include fluorine-containing resins such as polytetrafluoroethylene (PTFE) and polyvinylidene fluoride (PVDF), polyacrylonitrile (PAN), polyimide, an acrylic resin, and polyolefin. Also, these resins and carboxymethyl cellulose (CMC) or a salt thereof, polyethylene oxide (PEO), or the like may be used together.

The negative electrode 12 has a negative electrode core and negative electrode mixture layers formed on the negative electrode core. For the negative electrode core, it is possible to use a metal foil that is stable within a potential range of the negative electrode 12 such as copper or a copper alloy, a film with such metal disposed on a surface layer, or the like. The negative electrode mixture layers include a negative electrode active material, a binder, and a conductive agent as needed and are preferably formed on both surfaces of the negative electrode core except for a negative electrode core exposed portion (not illustrated) to which a negative electrode lead 19 is welded. The negative electrode 12 can be produced by applying a negative electrode mixture slurry including the negative electrode active material, the binder, and the like to the surface of the negative electrode core, drying the coating film, and then compressing it to form the negative electrode mixture layers on both surfaces of the negative electrode core.

The negative electrode mixture layers generally include a carbon material that reversibly occludes and discharges lithium ions as the negative electrode active material. Suitable examples of the carbon material include graphite such as natural graphite including flake graphite, lump graphite, and amorphous graphite and artificial graphite such as massive artificial graphite (MAG), and graphitized mesophase carbon microbeads (MCMB). As the negative electrode active material, a material including at least one of an element alloyed with Li, such as Si or Sn, and a material containing such an element may be used. Among these, a composite material containing Si is preferably adopted.

Suitable examples of the composite material containing Si include a material with Si fine particles dispersed in an SiO₂ phase or a silicate phase of lithium silicate or the like and a material with Si fine particles dispersed in an amorphous carbon phase. A conductive layer such as a carbon coating film, for example, is formed on the particle surfaces of the composite material. It is preferable to use the carbon material and the Si-containing composite material together as the negative electrode active material from the viewpoint of achieving both high capacity and high durability of the battery.

Although it is also possible to use a fluorine-containing resin, PAN, polyimide, an acrylic resin, polyolefin, or the like as the binder included in the negative electrode mixture layers similarly to the case of the positive electrode mixture layers, styrene-butadiene rubber (SBR) is preferably used. Also, the negative electrode mixture layers preferably include CMC or a salt thereof, a polyacrylic acid (PAA) or a salt thereof, polyvinyl alcohol (PVA), or the like. Among these, SBR is suitably used together with CMC or a salt thereof, PAA or a salt thereof, or the like. The negative electrode mixture layers may include a conductive agent such as CNT.

For the separator 13, porous sheets with ion permeability and insulation are used. Specific examples of the porous sheets include microporous thin films, woven fabric, and non-woven fabric. As a material of the separator 13, polyolefin such as polyethylene or polypropylene, cellulose, or the like is suitably used. The separator 13 may have a single-layer structure or may have a multi-layer structure. Also, resin layers with high heat resistance such as an aramid resin may be formed on the surfaces of the separator 13. A filler layer including an inorganic filler may be formed on an interface between the separator 13 and at least one of the positive electrode 11 and the negative electrode 12.

The positive electrode lead 18 is connected to the positive electrode 11, and the negative electrode lead 19 is connected on the winding end side of the negative electrode 12. The positive electrode lead 18 extends on the sealing assembly 30 side through a through-hole in the insulating plate 16, and the negative electrode lead 19 extends on the bottom portion 21 side of the housing can 20 through the outside of the insulating plate 17. The positive electrode lead 18 is connected to a lower surface of an inner terminal board 31 of the sealing assembly 30 through welding or the like, and the sealing assembly 30 serves as a positive electrode terminal. Also, the negative electrode lead 19 is connected to an inner surface of the bottom portion 21 of the housing can 20 made of metal through welding or the like, and the housing can 20 serves as a negative electrode terminal.

The housing can 20 is a metal container with a bottomed cylindrical shape opened on one side in the axial direction. The housing can 20 has the bottom portion 21 and a side surface portion 22 forming a side surface of the secondary battery 10. The side surface portion 22 is a part of the housing can 20 except for the bottom portion 21 and includes a groove portion 23 and an opening portion 24, which will be described later.

The groove portion 23 is a part of the side surface portion 22 sticking out inward in the radial direction, and an upper surface of the groove portion 23 supports the sealing assembly 30. The groove portion 23 is formed in an annular shape along the circumferential direction of the housing can 20. The groove portion 23 can be formed by performing spinning processing on a part of the side surface portion 22 inward in the radial direction to dent the part in an annular shape on the inward side in the radial direction.

The opening portion 24 is a region of the side surface portion 22 on the side further upward than the groove portion 23 and forms an opening of the housing can 20. The opening portion 24 is folded inward in the radial direction toward a peripheral edge portion of the sealing assembly 30 when the sealing assembly 30 is crimped and fixed to the housing can 20. In this manner, an opening side surface portion 25 that forms a part of the side surface of the secondary battery 10 and covers the outer peripheral surface of the gasket 40 and an opening upper surface portion 26 that forms a part of the upper surface of the secondary battery 10 and covers a part of the upper surface of the gasket 40 are formed in the opening portion 24. In the present embodiment, an inner end of the opening upper surface portion 26 in the radial direction is located on the side further outward in the radial direction than an inner end of the gasket 40 in the radial direction. In other words, the upper surface of the inner end of the gasket 40 in the radial direction is not covered with the opening upper surface portion 26.

The sealing assembly 30 is a disk-shaped member that comprises a safety valve. The sealing assembly 30 has a structure in which the inner terminal board 31, an insulating member 32, and an outer terminal board 33 are stacked in this order from the electrode assembly 14 side.

The inner terminal board 31 is a metal plate including a thick portion 31A with an increased thickness to which the positive electrode lead 18 is connected and a center portion 31B with a reduced thickness that is disconnected from the thick portion 31A when the internal pressure of the battery exceeds a predetermined threshold value. A plurality of ventilation holes 31C are formed in the thick portion 31A.

The insulating member 32 insulates a part other than the connected part between the inner terminal board 31 and the outer terminal board 33. An opening portion 32A is formed at the center portion of the insulating member 32 in the radial direction, and ventilation holes 32B are formed at parts overlapping the ventilation holes 31C of the inner terminal board 31.

The outer terminal board 33 forms a part of the upper surface of the secondary battery 10 and is disposed to face the inner terminal board 31 with the insulating member 32 sandwiched therebetween. The outer terminal board 33 has the thin portion 33A that ruptures when the internal pressure of the secondary battery 10 exceeds the predetermined threshold value. The outer terminal board 33 is connected, at its center portion in the radial direction, to the center portion 31B of the inner terminal board 31 through welding or the like. Although details will be described later, the outer side of the outer terminal board 33 in the radial direction is held between the opening portion 24 formed by bending the opening of the housing can 20 inward and the groove portion 23 with the gasket 40 interposed.

If an abnormality occurs in the secondary battery 10, and the internal pressure rises, then generated high-temperature gas pushes up the inner terminal board 31, the inner terminal board 31 ruptures, the center portion 31B is disconnected from the thick portion 31A, and the outer terminal board 33 is deformed to project toward the outside of the battery. In this manner, a current path in the sealing assembly 30 is interrupted. Then, if the internal pressure of the secondary battery 10 further rises after the current path is interrupted, the thin portion 33A of the outer terminal board 33 ruptures, and a gas outlet port is formed in the outer terminal board 33.

Note that the structure of the sealing assembly 30 is not limited to the structure illustrated in FIG. 1. The sealing assembly 30 may have a projecting cap that covers the outer terminal board 33, for example.

The gasket 40 is a sealing material that is interposed between the housing can 20 and the outer terminal board 33 constituting the sealing assembly 30. A clearance between the housing can 20 and the outer terminal board 33 is sealed and sealing inside the secondary battery 10 is secured by providing the gasket 40. In other words, the gasket 40 is required to seal the clearance between the housing can 20 and the outer terminal board 33.

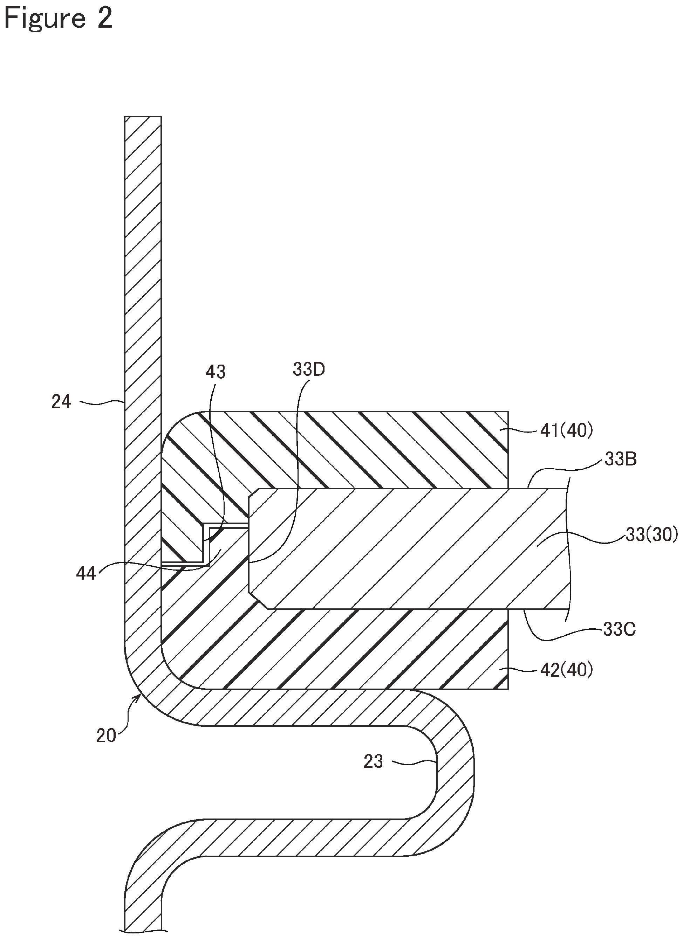

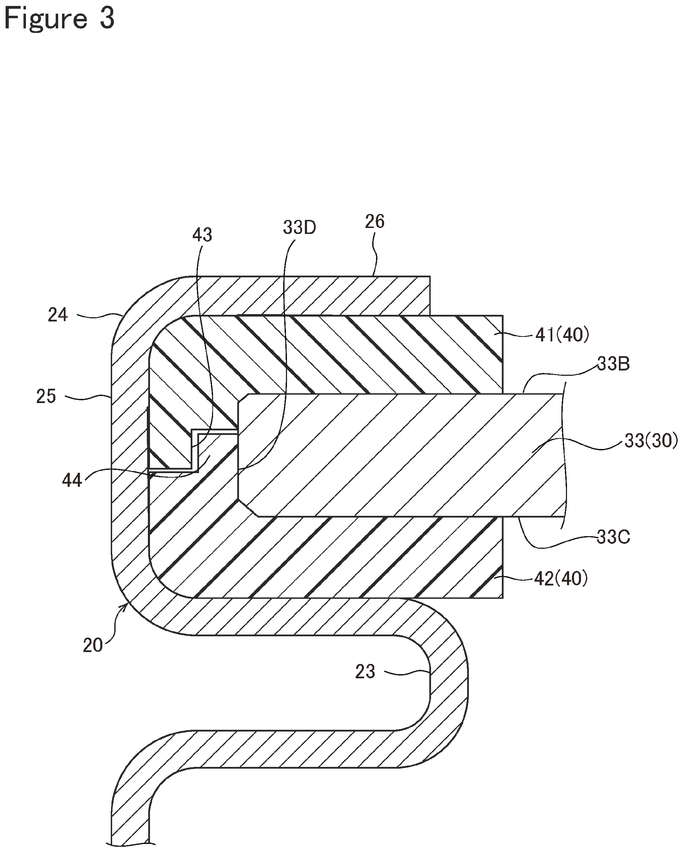

Next, the gasket 40 will be described in detail with further reference to FIGS. 2 and 3. FIG. 2 is a sectional view of the gasket 40 in a state before the housing can 20 is crimped, and FIG. 3 is a sectional view of the gasket 40 in a state after the housing can 20 is crimped. Note that FIGS. 2 and 3 illustrate a clearance provided at a boundary between a first gasket 41 and a second gasket 42 for convenience of explanation.

As illustrated in FIGS. 2 and 3, the gasket 40 includes the first gasket 41 and the second gasket 42 disposed on the side closer to the bottom portion 21 than the first gasket 41. Although the thicknesses of the first gasket 41 and the second gasket 42 may be different from each other, the thicknesses are preferably substantially the same from the viewpoint of securing sealing inside the secondary battery 10. Hereinafter, the first gasket 41 and the second gasket 42 may be collectively referred to as the gasket 40.

Both the first gasket 41 and the second gasket 42 are formed in an annular shape and have a substantially L shape in a sectional view in the axial direction in the state before the housing can 20 is crimped and in the state after the housing can 20 is crimped. Also, the first gasket 41 and the second gasket 42 are disposed to sandwich the outer terminal board 33 from both sides in the axial direction in the state before the housing can 20 is crimped and in the state after the housing can 20 is crimped. More specifically, the first gasket 41 covers the outer side of an upper surface 33B of the outer terminal board 33 in the radial direction and the upper side of an outer peripheral surface 33D in the state before the housing can 20 is crimped and in the state after the housing can 20 is crimped. Also, the second gasket 42 covers the outer side of a lower surface 33C of the outer terminal board 33 in the radial direction and the lower side of the outer peripheral surface 33D in the state before the housing can 20 is crimped and in the state after the housing can 20 is crimped. Although details will be described later, it is possible to reduce the amounts of deformation of the first gasket 41 and the second gasket 42 when the housing can 20 is crimped by disposing the first gasket 41 and the second gasket 42 to sandwich the outer terminal board 33 from both sides in the axial direction even in the state before the housing can 20 is crimped.

Both the first gasket 41 and the second gasket 42 are constituted of a resin material. Examples of the resin material constituting the first gasket 41 and the second gasket 42 include polyolefin resins such as polypropylene (PP), fluororesins such as a tetrafluoroethylene-perfluoroalkoxyethylene copolymer (PFA), and polyphenylene sulfide (PPS). It becomes easy to secure insulation between the housing can 20 and the sealing assembly 30 while sealing the clearance between the housing can 20 and the sealing assembly 30 by constituting the first gasket 41 and the second gasket 42 of the resin material. Note that although the first gasket 41 and the second gasket 42 may be constituted of different resin materials, the first gasket 41 and the second gasket 42 are preferably constituted of the same resin material from the viewpoint of productivity.

At least a part of the first gasket 41 is adjacent to the second gasket 42 in the radial direction. In the present embodiment, a projection portion 44 is provided on the inner side of the second gasket 42 in the radial direction, and a recessed portion 43 into which the projection portion 44 is fitted is provided on the inner side of the first gasket 41 in the radial direction. In this manner, a region where the first gasket 41 and the second gasket 42 are adjacent to each other in the radial direction is formed.

The first gasket 41, in particular, is pressed inward in the radial direction when the opening portion 24 of the housing can 20 is crimped. At this time, falling-off of the first gasket 41 from the second gasket 42 is curbed by providing the region where the first gasket 41 and the second gasket 42 are adjacent to each other in the radial direction. As a result, it is possible to secure sealing of the inside of the secondary battery 10. In other words, if the region where the first gasket 41 and the second gasket 42 are adjacent to each other in the radial direction is not provided, the first gasket 41 may fall off from the second gasket 42 when the opening portion 24 of the housing can 20 is crimped, and the sealing of the inside of the secondary battery 10 may thus be degraded.

Moreover, a level difference is formed at the boundary line between the first gasket 41 and the second gasket 42 by providing the region where the first gasket 41 and the second gasket 42 are adjacent to each other in the radial direction. It is thus possible to increase the distance of the boundary line between the first gasket 41 and the second gasket 42. As a result, it is possible to curb entrance of foreign matters such as an electrolytic solution on the sealing assembly 30 side even in a case where the foreign matters are present on the inner surface of the opening portion 24, for example. In other words, if the region where the first gasket 41 and the second gasket 42 are adjacent to each other in the radial direction is not provided, and the level difference is not formed at the boundary line between the first gasket 41 and the second gasket 42, the foreign matters that are present on the inner surface of the opening portion 24 may enter the sealing assembly 30 side. In a case where the foreign matters have electrical conductivity, it may not be possible to sufficiently secure insulation between the housing can 20 and the sealing assembly 30, and battery performance may be degraded.

The depth of the recessed portion 43 is the same as the height of the projection portion 44. In this manner, a clearance is unlikely to be formed between the first gasket 41 and the second gasket 42, and it is possible to secure sealing of the inside of the secondary battery 10.

The depth of the recessed portion 43 (the height of the projection portion 44) is preferably greater than or equal to 20% and is more preferably greater than or equal to 25% of the thickness of the sealing assembly 30 (the outer terminal board 33 in the present embodiment) sandwiched between the first gasket 41 and the second gasket 42. The first gasket 41 is unlikely to fall off from the second gasket 42 at the time of crimping fixation by setting the depth of the recessed portion 43 (the height of the projection portion 44) to be greater than or equal to 20% of the thickness of the sealing assembly 30 sandwiched between the first gasket 41 and the second gasket 42. Also, it is possible to form the level difference with a size to some extent at the boundary line between the first gasket 41 and the second gasket 42 by setting the depth of the recessed portion 43 (the height of the projection portion 44) to be greater than or equal to 20% of the thickness of the sealing assembly 30 sandwiched between the first gasket 41 and the second gasket 42. Note that an upper limit of the depth of the recessed portion 43 (the height of the projection portion 44) is 90% of the thickness of the sealing assembly 30 sandwiched between the first gasket 41 and the second gasket 42, for example.

The recessed portion 43 and the projection portion 44 are preferably provided over the entire peripheries of the first gasket 41 and the second gasket 42. In this case, the first gasket 41 is unlikely to fall off from the second gasket 42 at the time of crimping fixation.

Note that although the recessed portion 43 is provided in the first gasket 41 and the projection portion 44 is provided in the second gasket 42 in the present embodiment, the present disclosure is not limited thereto, and the projection may be provided in the first gasket 41, and the recessed portion may be provided in the second gasket 42. Also, the formation position of the projection portion 44 is not limited to the inner side of the second gasket 42 in the radial direction, and the projection portion 44 may be provided at the center portion of the second gasket 42 in the radial direction or the outer side of the second gasket 42 in the radial direction.

Here, a configuration of a gasket constituted of one member in the related art will be described, and also, effects of the gasket 40 constituted of the two members in the present embodiment will be described. In general, a gasket with a substantially L shape in a sectional view in the axial direction is used in the state before the housing can 20 is crimped in the case where the gasket is constituted of one member. The gasket is disposed in a state where the gasket abuts on the lower surface 33C and the outer peripheral surface 33D of the outer terminal board 33 and is disposed in a state where the gasket does not abut on the upper surface 33B of the outer terminal board 33 with the upper region of the gasket abutting on the opening portion 24 in the state before the housing can 20 is crimped. In other words, in the case where the gasket is constituted of one member, the gasket is disposed in a state where the gasket does not sandwich the outer terminal board 33 from both sides in the axial direction in the state before the housing can 20 is crimped. Also, the upper region of the gasket is pressed by the opening portion 24 and is folded inward in the radial direction toward the peripheral edge portion of the outer terminal board 33 when the housing can 20 is crimped. In this manner, a state where the gasket sandwiches the outer terminal board 33 from both sides in the axial direction is achieved.

Here, the volume in the vicinity of the folded region of the gasket may decrease when the upper region of the gasket is folded inward in the radial direction. In this manner, the volume on the inner end side of the gasket in the radial direction rather increases, and as a result, warpage or wrinkles may occur in the vicinity of the inner end of the gasket in the radial direction. Also, the outer peripheral part of the gasket may be extended on the inner end side of the gasket in the radial direction when the upper region of the gasket is folded inward in the radial direction. In this manner, the volume of the outer peripheral part of the gasket may decrease, and as a result, sealing of the inside of the secondary battery 10 may be degraded.

On the other hand, the gasket 40 can sandwich the outer terminal board 33 from both sides in the axial direction even in the state before the housing can 20 is crimped by constituting the gasket 40 of two members, namely the first gasket 41 and the second gasket 42 as in the present embodiment. In this manner, the gasket 40 is not folded inward in the radial direction when the housing can 20 is crimped, and the volume of the gasket 40 is unlikely to change. As a result, it is possible to curb occurrence of warpage or wrinkles of the gasket 40 while securing sealing of the inside of the secondary battery 10.

Next, a process of manufacturing the secondary battery 10 of the present embodiment will be described with reference to FIGS. 1 to 3.

The process of manufacturing the secondary battery 10 includes, for example, an attachment process of attaching the gasket 40 to the sealing assembly 30, an insertion process of inserting the electrode assembly 14 into the housing can 20 and connecting the sealing assembly 30 to the electrode assembly 14, and a crimping process of crimping and fixing the opening portion 24 of the housing can 20. Note that the order of the attachment process and the insertion process is not particularly limited, and the attachment process may be performed after the insertion process is performed.

In the attachment process, the first gasket 41 and the second gasket 42 are attached to the outer side of the sealing assembly 30 (the outer terminal board 33 in the present embodiment) in the radial direction. More specifically, the second gasket 42 is disposed from the lower portion of the outer terminal board 33 such that the second gasket 42 covers the outer side of the lower surface 33C of the outer terminal board 33 in the radial direction and the lower side of the outer peripheral surface 33D first. Then, the first gasket 41 is disposed from the upper portion of the outer terminal board 33 such that the first gasket 41 covers the outer side of the upper surface 33B of the outer terminal board 33 in the radial direction and the upper side of the outer peripheral surface 33D. At this time, the first gasket 41 is disposed such that the projection portion 44 provided in the second gasket 42 is fitted into the recessed portion 43 provided in the first gasket 41. In this manner, it is possible to sandwich the outer terminal board 33 between the first gasket 41 and the second gasket 42 from both sides in the axial direction in the state where the first gasket 41 and the second gasket 42 are placed adjacent to each other in the radial direction.

In the insertion process, the sealing assembly 30 produced in the attachment process is connected to the electrode assembly 14 via the positive electrode lead 18. Then, the electrode assembly 14 is inserted into the housing can 20. Then, the groove portion 23 that supports the sealing assembly 30 is formed on the opening side of the side surface portion 22 of the housing can 20 through spinning processing from the outer side in the radial direction.

In the crimping process, the sealing assembly 30 is inserted into the housing can 20, and the outer terminal board 33 is disposed on the upper surface of the groove portion 23 as illustrated in FIG. 2. Then, the opening portion 24 is folded inward in the radial direction toward the peripheral edge portion of the outer terminal board 33 as illustrated in FIG. 3. In this manner, the sealing assembly 30 is crimped and fixed to the opening portion 24 of the housing can 20 with the gasket 40 interposed.

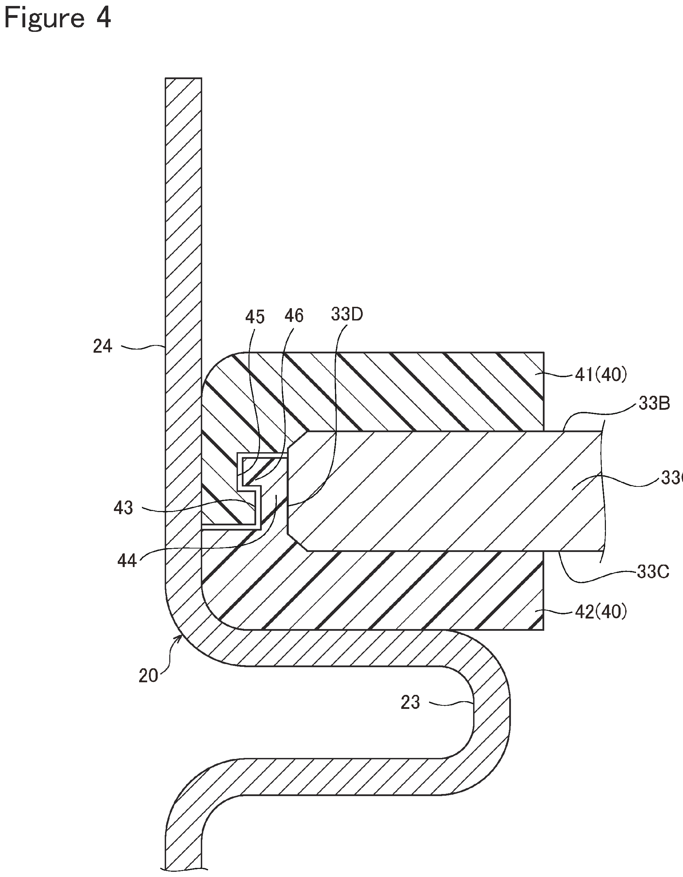

Next, modifications of the shape of the gasket 40 will be described with reference to FIGS. 4 to 6. FIGS. 4 to 6 are sectional views of the gasket 40 in the state before the housing can 20 is crimped. Note that FIGS. 4 to 6 illustrate a clearance provided at the boundary between the first gasket 41 and the second gasket 42 for convenience of explanation.

As illustrated in FIG. 4, a claw portion 46 may be provided on the outer peripheral surface of the projection portion 44 provided in the second gasket 42, and a groove portion 45 fitted into the claw portion 46 may be provided on the inner peripheral surface of the recessed portion 43 provided in the first gasket 41. It is possible to strongly fix the first gasket 41 and the second gasket 42 by providing the claw portion 46 and the groove portion 45. As a result, falling-off of the first gasket 41 from the second gasket 42 is curbed when the housing can 20 is crimped, and it is possible to further secure sealing of the inside of the secondary battery 10. Note that the claw portion 46 and the groove portion 45 may be provided over the entire peripheries of the first gasket 41 and the second gasket 42 or may be provided only partial regions in the circumferential direction.

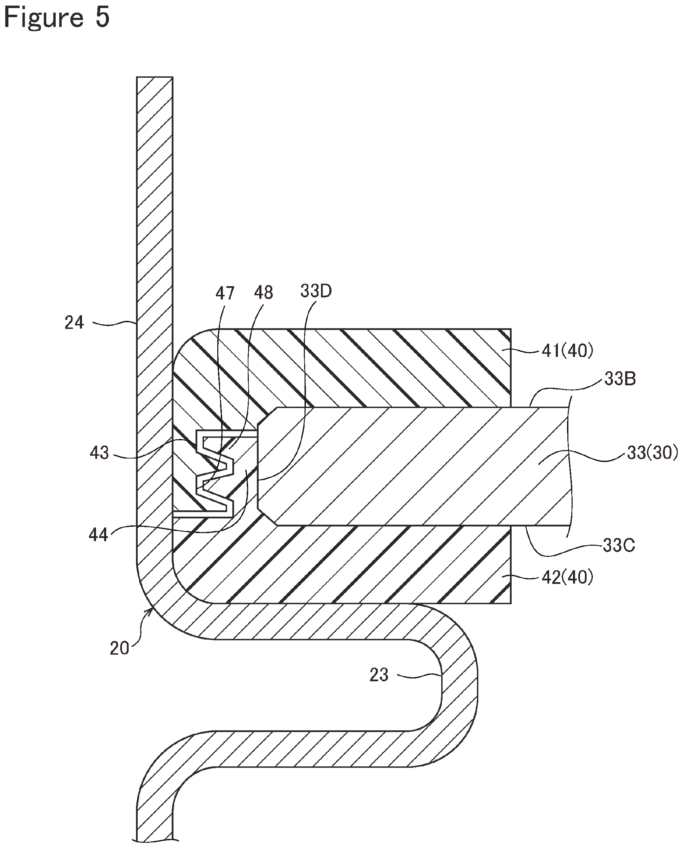

Alternatively, a male screw portion 48 may be provided on the outer peripheral surface of the projection portion 44 provided in the second gasket 42, and a female screw portion 47 fitted into the male screw portion 48 may be provided on the inner circumferential surface of the recessed portion 43 provided in the first gasket 41 as illustrated in FIG. 5. It is possible to strongly fix the first gasket 41 and the second gasket 42 by providing the male screw portion 48 and the female screw portion 47. As a result, falling-off of the first gasket 41 from the second gasket 42 is curbed when the housing can 20 is crimped, and it is possible to further secure sealing of the inside of the secondary battery 10.

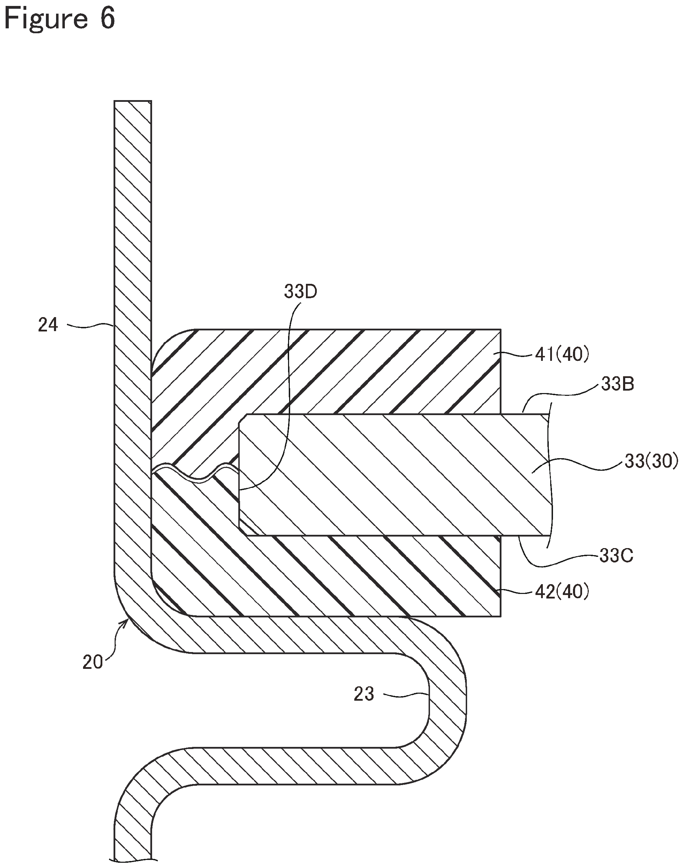

Alternatively, the boundary line between the first gasket 41 and the second gasket 42 in a sectional view in the axial direction may be a wave form as illustrated in FIG. 6. It is possible to provide a region where the first gasket 41 and the second gasket 42 are adjacent to each other in the radial direction by forming the wave-form boundary line between the first gasket 41 and the second gasket 42. As a result, falling-off of the first gasket 41 from the second gasket 42 is curbed when the housing can 20 is crimped, and it is possible to secure sealing of the inside of the secondary battery 10.

Here, examples of a method of forming a wave-form boundary line between the first gasket 41 and the second gasket 42 include a method of heating the first gasket 41 and the second gasket 42 at a temperature that is greater than or equal to a softening temperature of the resin material from the outer side in the radial direction. More specifically, the sealing assembly 30 (the outer terminal board 33 in the present embodiment) is sandwiched between the first gasket 41 and the second gasket 42 from both sides in the axial direction before the opening portion of the housing can 20 is crimped first. At this time, the boundary line between the first gasket 41 and the second gasket 42 may be a straight line, and furthermore, a level difference may not be formed at the boundary line between the first gasket 41 and the second gasket 42. In other words, the recessed portion 43 and the projection portion 44 may not be provided in the first gasket 41 and the second gasket 42, and surfaces on which the first gasket 41 and the second gasket 42 abut on one another may be flat.

Then, the first gasket 41 and the second gasket 42 are heated at a temperature that is greater than or equal to the softening temperature of the resin material (equal to or greater than 150°C, for example) from the outer side in the radial direction in the state where the outer terminal board 33 is sandwiched between the first gasket 41 and the second gasket 42 from both sides in the axial direction. In this manner, the resin material constituting the first gasket 41 and the second gasket 42 is softened, and the boundary line between the first gasket 41 and the second gasket 42 becomes a wave form. Note that the boundary line between the first gasket 41 and the second gasket 42 after the heating processing is not limited to the wave form and may be a straight line or may have an uneven shape.

The present disclosure is further described by the following embodiments.

Configuration 1: A secondary battery, comprising: an electrode assembly in which a positive electrode and a negative electrode are wound with a separator interposed therebetween; a cylindrical housing can that has a bottom portion and accommodates the electrode assembly; a disk-shaped sealing assembly that closes an opening portion of the housing can; and an annular gasket that is interposed between the housing can and the sealing assembly, the sealing assembly being crimped and fixed to the opening portion of the housing can with the gasket interposed, wherein the gasket includes a first gasket and a second gasket that is disposed on a side closer to the bottom portion than the first gasket, the sealing assembly is sandwiched between the first gasket and the second gasket from both sides of the housing can in an axial direction, and at least a part of the first gasket is adjacent to the second gasket in a radial direction of the housing can.

Configuration 2: The secondary battery according to claim 1, wherein one of the first gasket and the second gasket has a projection portion, and the other one of the first gasket and the second gasket has a recessed portion in which the projection portion is disposed.

Configuration 3: The secondary battery according to claim 2, wherein the projection portion and the recessed portion are provided over an entire periphery of the gasket.

Configuration 4: The secondary battery according to claim 2 or 3, wherein the projection portion is provided with a claw portion, and the recessed portion is provided with a groove portion that is fitted into the claw portion.

Configuration 5: The secondary battery according to claim 2, wherein the projection portion is provided with a male screw portion, and the recessed portion is provided with a female screw portion that is fitted into the male screw portion.

Configuration 6: The secondary battery according to claim 1, wherein a boundary line between the first gasket and the second gasket has a wave form in a sectional view in an axial direction of the housing can.

Configuration 7: A method of manufacturing a secondary battery comprising a cylindrical housing can that has a bottom portion and accommodates an electrode assembly, a disk-shaped sealing assembly that closes an opening portion of the housing can, and an annular gasket that is interposed between the housing can and the sealing assembly, the gasket including a first gasket and a second gasket that abuts on the first gasket and is disposed on a side closer to the bottom portion than the first gasket, the method including: sandwiching the sealing assembly between the first gasket and the second gasket from both sides in an axial direction in a state where at least a part of the first gasket is placed adjacent to the second gasket in a radial direction before the opening portion of the housing can is crimped; and folding the opening portion of the housing can inward in the radial direction and crimping and fixing the sealing assembly to the opening portion of the housing can with the gasket interposed.

Configuration 8: A method of manufacturing a secondary battery comprising a cylindrical housing can that has a bottom portion and accommodates an electrode assembly, a disk-shaped sealing assembly that closes an opening portion of the housing can, and an annular gasket that is interposed between the housing can and the sealing assembly and is constituted of a resin material, the gasket including a first gasket and a second gasket that abuts on the first gasket and is disposed on a side closer to the bottom portion than the first gasket, the method including: sandwiching the sealing assembly between the first gasket and the second gasket from both sides in an axial direction before the opening portion of the housing can is crimped; heating the first gasket and the second gasket at a temperature that is greater than or equal to a softening temperature of the resin material from an outer side in a radial direction; and folding the opening portion of the housing can inward in the radial direction and crimping and fixing the sealing assembly to the opening portion of the housing can with the gasket interposed.

### REFERENCE SIGNS LIST

10 Secondary battery, 11 Positive electrode, 12 Negative electrode, 13 Separator, 14 Electrode assembly, 16, 17 Insulating plate, 18 Positive electrode lead, 19 Negative electrode lead, 20 Housing can, 21 Bottom portion, 22 Side surface portion, 23 Groove portion, 24 Opening portion, 25 Opening side surface portion, 26 Opening upper surface portion, 30 Sealing assembly, 31 Inner terminal board, 31A Thick portion, 31B Center portion, 31C Ventilation hole, 32 Insulating member, 32A Opening portion, 32B Ventilation hole, 33 Outer terminal board, 33A Thin portion, 33B Upper surface, 33C Lower surface, 33D Outer peripheral surface, 40 Gasket, 41 First gasket, 42 Second gasket 42, 43 Recessed portion, 44 Projection portion, 45 Groove portion, 46 Claw portion, 47 Female screw portion, 48 Male screw portion

## Claims

1. A secondary battery, comprising:
an electrode assembly in which a positive electrode and a negative electrode are wound with a separator interposed therebetween;
a cylindrical housing can that has a bottom portion and accommodates the electrode assembly;
a disk-shaped sealing assembly that closes an opening portion of the housing can; and
an annular gasket that is interposed between the housing can and the sealing assembly, the sealing assembly being crimped and fixed to the opening portion of the housing can with the gasket interposed, wherein
the gasket includes a first gasket and a second gasket that is disposed on a side closer to the bottom portion than the first gasket,
the sealing assembly is sandwiched between the first gasket and the second gasket from both sides of the housing can in an axial direction, and
at least a part of the first gasket is adjacent to the second gasket in a radial direction of the housing can.

2. The secondary battery according to claim 1,
wherein one of the first gasket and the second gasket has a projection portion, and
the other one of the first gasket and the second gasket has a recessed portion in which the projection portion is disposed.

3. The secondary battery according to claim 2, wherein the projection portion and the recessed portion are provided over an entire periphery of the gasket.

4. The secondary battery according to claim 2, wherein
the projection portion is provided with a claw portion, and
the recessed portion is provided with a groove portion that is fitted into the claw portion.

5. The secondary battery according to claim 2, wherein
the projection portion is provided with a male screw portion, and
the recessed portion is provided with a female screw portion that is fitted into the male screw portion.

6. The secondary battery according to claim 1, wherein a boundary line between the first gasket and the second gasket has a wave form in a sectional view in an axial direction of the housing can.

7. A method of manufacturing a secondary battery comprising a cylindrical housing can that has a bottom portion and accommodates an electrode assembly, a disk-shaped sealing assembly that closes an opening portion of the housing can, and an annular gasket that is interposed between the housing can and the sealing assembly, the gasket including a first gasket and a second gasket that abuts on the first gasket and is disposed on a side closer to the bottom portion than the first gasket, the method including:
sandwiching the sealing assembly between the first gasket and the second gasket from both sides in an axial direction in a state where at least a part of the first gasket is placed adjacent to the second gasket in a radial direction of the housing can before the opening portion of the housing can is crimped; and
folding the opening portion of the housing can inward in the radial direction and crimping and fixing the sealing assembly to the opening portion of the housing can with the gasket interposed.

8. A method of manufacturing a secondary battery comprising a cylindrical housing can that has a bottom portion and accommodates an electrode assembly, a disk-shaped sealing assembly that closes an opening portion of the housing can, and an annular gasket that is interposed between the housing can and the sealing assembly and is constituted of a resin material, the gasket including a first gasket and a second gasket that abuts on the first gasket and is disposed on a side closer to the bottom portion than the first gasket, the method including:
sandwiching the sealing assembly between the first gasket and the second gasket from both sides in an axial direction before the opening portion of the housing can is crimped;
heating the first gasket and the second gasket at a temperature that is greater than or equal to a softening temperature of the resin material from an outer side in a radial direction; and
folding the opening portion of the housing can inward in the radial direction and crimping and fixing the sealing assembly to the opening portion of the housing can with the gasket interposed.
